# EUROPÄISCHE PATENTANMELDUNG

(11) **EP 4 112 434 A1**
(43) Veröffentlichungstag der Anmeldung: **04.01.2023**
(21) Anmeldenummer: 22174195.2
(22) Anmeldetag: 18.05.2022
(51) Int. Cl.: B62K 27/00, B62D 63/06

(54) **MODULARER EINSPURANHÄNGER**

(30) Priorität: 30.06.2021 DE 102021206885
(71) Anmelder: Masch, Ruben, 69115 Heidelberg (DE)
(72) Erfinder: Masch, Ruben, 69115 Heidelberg (DE)
(74) Vertreter: Ullrich & Naumann PartG mbB

(57) **Zusammenfassung**

Beschrieben ist ein modularer Einspuranhänger umfassend ein Basismodul mit einer Rahmenkonstruktion, die eine Bodengruppe trägt, an der eine Radachse mit einem Laufrad angeordnet ist.

## Beschreibung

Die Erfindung betrifft einen modularen Einspuranhänger für Zweiräder und Fußgänger.

Übliche Anbauten an Zweirädern zur Gepäckbeförderung wie Gepäckträger und Packtaschen beeinflussen ab einem bestimmten Gewicht die Fahreigenschaften des Zweirades ungünstig. Für den Transport größerer Mengen an Gepäck kommen daher Anhänger in Frage.

Anhänger für PKW und Zweiräder, wie etwa Fahrräder, E-Bikes, Pedelecs, Mofas, Roller und Motorräder sind seit vielen Jahren bekannt. Anhänger werden üblicherweise zur Beförderung von Personen oder Gegenständen, wie etwa Gepäck, benutzt. Sie haben keinen eigenen Antrieb und werden folglich mittels Zug- oder Schubkraft bewegt. Bei den genannten Fahrzeugen werden üblicherweise Anhänger verwendet, die mittels Zugkraft bewegt werden und daher hinter das Fahrzeug gespannt werden.

Für vorwiegend ebene Fahrwege, wie etwa Fahrradwege und asphaltierte Straßen, bieten sich für den Transport von Gepäck zweispurige sowie einspurige Anhänger an. Zweispurige Anhänger weisen ruhige Fahreigenschaften auf und verleihen dem Anhänger über die zwei Laufräder eine gewisse Stabilität auch im abgekoppelten Zustand, sodass dieser nicht seitlich umkippt. Nachteilig ist, dass die Fahreigenschaft auf unebenen Fahrwegen, wie etwa Feldwegen, Waldwegen oder Wanderwegen, unruhig ist. Dies überträgt sich auf das Zugfahrzeug und beeinträchtigt somit die Fahreigenschaft erheblich. Außerdem sind zweispurige Anhänger üblicherweise um einiges Breiter als das Zugfahrzeug. Beispielsweise wird bei einem Fahrrad die Breite üblicherweise vom Lenker vorgegeben. Durchfahren von Engstellen ist somit meist nicht ohne weiteres möglich.

Im Verglich mit einem zweispurigen Anhänger sind die Fahreigenschaften von einspurigen Anhängern verbessert. Sie folgen dem Zugfahrzeug spurtreu und mit Schräglage durch alle Kurven und rollen auch mit kleinen Rädern ruhig. Somit ist der Einsatzbereich von Einspuranhängern größer als der von zweispurigen Anhängern.

Problematisch ist jedoch bisher, dass entweder der Stauraum von einspurigen Anhängern zu klein ist, um ausreichend Gepäck und Equipment für längere Fahrten oder Touren zu transportieren, oder dass die Abmessungen der Anhänger derart groß dimensioniert sind, dass zwar genug Stauraum vorhanden ist, sich jedoch die Fahreigenschaften, insbesondere auf unebenen und engen Fahrwegen, verschlechterten.

Der vorliegenden Erfindung liegt daher die Aufgabe zugrunde, einen Einspuranhänger bereitzustellen, der in kompakter Bauweise einen möglichst großen und vielseitigen Stauraum bietet, der einfach Beladen werden kann und der verbesserte Fahreigenschaften aufweist.

Erfindungsgemäß wird die voranstehende Aufgabe durch die Merkmale des Anspruchs 1 gelöst. Danach umfasst der in Rede stehende modularer Einspuranhänger ein Basismodul mit einer Rahmenkonstruktion, die eine Bodengruppe trägt, an der eine Radachse mit einem Laufrad angeordnet ist, wobei die Rahmenkonstruktion mindestens ein Staufach umfasst, und wobei das Basismodul Aufnahmen für mindestens ein weiteres Modul aufweist.

In erfindungsgemäßer Weise ist zunächst erkannt worden, dass ein Einspuranhänger einen größeren Einsatzbereich gegenüber zweispurigen Anhängern aufweist. Beispielsweise zeigt ein einspuriger Anhänger eine bessere Fahrbarkeit auf Feldwegen, Waldwegen, Wanderwegen usw. Ein Einspuranhänger ist somit ideal geeignet für Trekkingtouren und/oder Campingausflüge.

Unter einem Einspuranhänger ist ein einachsiger und einrädriger Anhänger zu verstehen, der üblicherweise mittels einer Deichsel mit einem Fahrzeug, insbesondere einem Zweirad, oder über bestimmte Gurt-Deichsel-Systeme mit einer Person verbunden ist.

Die Begriffe "modular" und "Modul" beziehen sich auf den Aufbau eines Ganzen, wie im vorliegenden Fall einem Einspuranhänger, aus einzelnen Komponenten. Diese Komponenten können bei geeigneter Form und Funktion mit einem Basismodul und/oder anderen passenden Modulen bzw. Komponenten zusammengefügt werden oder über entsprechende Schnittstellen interagieren.

Ausgehend von einem Basismodul ergibt sich somit eine Vielzahl an Ausgestaltungsformen des Anhängers.

Unter dem Begriff "Aufnahme" ist ein definierter Interaktionspunkt zwischen zwei Komponenten und/oder Modulen zu verstehen. Bei dem beschriebenen Einspuranhänger sind diese definierten Interaktionspunkte am Basismodul angeordnet und geben zumindest die örtliche Platzierung der aufzunehmenden Komponente vor. Aufnahmen können beispielsweise Klipp-, Schraub-, oder Klettmechanismen umfassen. Des Weiteren können Aufnahmen Ösen, Hülsen, Rahmen,- oder Rohrkonstruktionen sein, in die eine Komponente oder ein Teil davon aufgenommen wird.

Ein "Staufach" gemäß der vorliegenden Erfindung ist ein am und/oder im Rahmenkonstrukt des Basismoduls angeordneter, mittels Wänden, wie etwa Seiten- und/oder Zwischenwänden, abgetrennter Bereich, wie beispielsweise Taschen, der zum Verstauen von Gegenständen, wie etwa Gepäck, Lebensmittel, Werkzeug und dergleichen dient.

Der erfindungsgemäße Einspuranhänger kann mittels zusätzlicher Module zu einem Trekking- oder Campinganhänger ausgerüstet werden, der es erlaub Fahrten über mehrere Tage durchzuführen und entsprechendes Gepäck und Equipment mitzuführen.

Ohne die zusätzlichen Module, also lediglich das Basismodul, kann der Anhänger als einfacher Transportanhänger verwendet werden, der jederzeit mit zusätzlichen Modulen bestückt werden kann. Die Module können beispielweise über Steckverbindungen oder über einen Schubmechanismus mit dem Basismodul verbunden werden. Denkbar sind auch Fixierpunkt in Form von vordefinierten Aufnahmen für Schrauben oder dergleichen.

Bei Trekkingtouren oder Campingurlauben ist oft keine geeignete Stromquelle zur Hand. Es könnten Batterien oder Akkus mitgeführt werden, diese nehmen allerdings zusätzlichen Stauraum ein. Die verschiedenen Seiten- und Oberflächen des Basismoduls können daher mindestens ein Solarmodul tragen, das der Stromgewinnung durch Sonnenenergie dient.

Des Weiteren kann in dem Basismodul entsprechende Ladetechnik verbaut sein, womit Akkus, wie etwa Power Banks oder E-Bike Akkus geladen werden können. Dies ist insbesondere für längere Fahrten durch die Natur vorteilhaft, in der es keinen Zugang zu sonstigen Stromquellen gibt. Außerdem kann während der Fahrt der laufen Strombedarf von beispielsweise Navigationsgeräten gedeckt werden.

In einer Ausführungsform ist daher mindestens ein abnehmbares Solarmodul zur Stromgewinnung an dem Basismodul angeordnet.

Besonders vorteilhaft an einem abnehmbaren Solarmodul ist, dass dieses ja nach Lichteinfall auf dem Basismodul positioniert werden kann. Somit ist eine ideale Lichtausbeute über den Tag und unabhängig von der Fahrtrichtung möglich.

Außerdem können mehrere Solarmodule an dem Basismodul angeordnet sein, um den benötigten Energiebedarf zu decken. In einer weiteren Ausführungsform können mehrere Solarmodule dafür parallel oder in Reihe geschaltet sein. Die Leistung kann bei ca. 100 Watt liegen.

Des Weiteren können an dem Basismodul ferner Spannungswandler, vorzugsweise Aufwärtswandler und/oder Abwärtswandler, angeordnet sein, um die Spannungsanforderungen verschiedener Stromabnehmer zu erfüllen.

Um verderbliche Waren, wie etwa Lebensmittel, über mehrere Stunden oder Tage ohne Qualitätseinbußen zu transportieren oder bei entsprechender Aktivität und heißem Wetter kalte Getränke vorrätig zu haben, kann das Basismodul ein thermoisoliertes Kühlfach aufweisen, das vorzugsweise in einem Staufach angeordnet ist.

Ebenfalls ist es für die Organisation des Gepäcks vorteilhaft, den Stauraum des Anhängers in mehrere Staufächer zu unterteilen. Durch die Unterteilung in mehrere Staufächer bietet der Anhänger eine Vielzahl an Staumöglichkeiten.

Die Unterteilung kann durch Seiten- bzw. Außenwände und Zwischenwände, die an der Rahmenkonstruktion angeordnet sind, ermöglicht werden.

In einer Ausführungsform weist die Rahmenkonstruktion ein Frontstaufach, also ein in Fahrtrichtung vorne angeordnetes Fach, und zwei Hauptstaufächer auf, wobei die Hauptstaufächer vorzugsweise ferner je zwei Bodenstaufächer aufweisen.

In einer Ausführungsform ist das Kühlfach in dem Frontstaufach angeordnet. Somit ist ein schneller Zugriff auch vom Fahrzeug aus möglich. Das Kühlfach kann dabei ein Volumen von 1 bis 5 L aufweisen. Vorzugsweise weißt das Kühlfach ein Volumen von 3 L auf.

In einer weiteren Ausführungsform kann das Stauvolumen mehr als 100 L betragen. Vorzugsweise zwischen 100 und 125 L.

In einer weiteren Ausführungsform ist eine Deichsel lösbar oder unlösbar an der Rahmenkonstruktion angeordnet. Dadurch ist es möglich, abhängig vom Zugfahrzeug, wie etwa Fahrräder, E-Bikes, Pedelecs, Mofas oder Roller, eine entsprechende Deichsel zu montieren, die den benötigen Erfordernissen entspricht. Außerdem kann der Anhänger durch ein Deichsel-Gurtsystem von Wanderern oder Pilgern gezogen werden. Die Rahmenkonstruktion kann Verstrebungen an der Deichselaufnahme aufweisen um der erhöhten Beanspruchung während der Fahrt zu entsprechen.

In einer Ausführungsform ist an dem Basismodul ein Bettmodul angeordnet, das ein klappbares und/oder ausziehbares Bett umfasst und vorzugsweise auf dem Basismodul aufliegt. Vorteilhaft an einem klappbaren und/oder ausziehbaren Bett ist, dass dieses platzsparend verstaut und transportiert werden kann. Um eine möglichst breite Liegefläche des Bettes zu ermöglichen, kann das Bett derart auf dem Basismodul angeordnet sein, dass es sich senkrecht zur Fahrtrichtung des Anhängers aufklappen und/oder ausziehen lässt. Somit kann die Breite des Bettes grundsätzlich der Länge des Anhängers entsprechen, ohne dass das Bettmodul an der Frontseite oder der Hinterseite des Anhängers übersteht. Denkbar ist außerdem, dass das Bett zu einem Doppelbett ausgeklappt und/oder ausgezogen werden kann. Dafür kann das Bett zusätzlich einmal in Fahrtrichtung des Anhängers aufklappbar und/oder ausziehbar sein. In einer weiteren Ausführungsform ist das Bett senkrecht zur Fahrtrichtung des Anhängers klappbar und/oder ausziehbar. Das ausgeklappte und/oder ausgezogene Bett weist beispielsweise eine Breite von 110 bis 120 cm auf.

Das Bett kann über Scharniere aufgeklappt werden. Die Scharniere können dafür arretierbar sein. Damit wird gewährleistet, dass der Bettrahmen schnell und einfach aufgeklappt und versteift werden kann, ohne dass zusätzliches Werkzeug benötigt wird.

Das Bett kann für den Transport mit einer Abdeckplane abgedeckt sein. Die Abdeckplane kann wasserdicht sein, um das Bett beim Transport vor Regen zu schützen. Die Abdeckplane kann nach der Abnahme als wasserdichte Unterlage, beispielsweise für ein Vorzelt, verwendet werden.

Der Bezug des Bettes kann abnehmbar sein. Beispielsweise kann der Bezug mit Klettverschlüssen am Bettrahmen befestigt sein.

In einer weiteren Ausführungsform umfasst das Bettmodul ferner ein Zeltmodul, das ein faltbares Zelt umfasst, wobei das Zelt vorzugsweise ein atmungsaktives, insbesondere netzartiges Innenzelt und ein wasserdichtes Außenzelt umfasst.

In einer weiteren Ausführungsform weist das Bett Aufnahmehülsen für klappbare und/oder ausziehbare Zeltstreben auf, um das Zelt aufzurichten. Das Zelt lässt sich mittels flexibler und/oder faltbarer Streben oder faltbarer Metallstreben, wie etwa Aluminiumstreben, leicht aufstellen. Die Zeltstreben können direkt mittels sich am Bettrahmen befindlichen Aufnahmehülsen über dem ausgeklappten und/oder ausgezogenen Bett aufgerichtet werden. Dafür werden die Zeltstreben in die dafür vorgesehenen Aufnahmehülsen an dem Fuß- und Kopfende des Bettrahmens eingeführt. Es ergibt sich eine Strebenkonstruktion, die halbkreisförmig über das Bett verläuft. Die weiteren Zeltelemente, wie etwa das Innenzelt und das Außenzelt werden mit der Strebenkonstruktion verbunden, sodass sich eine Zeltkonstruktion über dem Bett ergibt. Dabei kann das Innenzelt alleine als Zelt verwendet werden. Das ist insbesondere bei wärmeren Temperaturen vorteilhaft, da sich warme Luft nicht im Zelt staut. Außerdem vermeidet das Innenzelt, dass Insekten, insbesondere stechende Insekten, in das Zelt gelangen.

Das Außenzelt dient als Regenschutz beziehungsweise Schutz vor Feuchtigkeit und kann über das an der Strebenkonstruktion befestigte Innenzelt gelegt werden und mit Abspannseilen am Boden oder am Hänger abgespannt werden.

Das Innenzelt kann am Rahmen des Bettes befestigt sein, beispielswiese mit einem Klettverschluss. Somit ist es möglich, dass das Innenzelt im eingeklappten Zustand am Bett verbleiben kann und nicht jedes Mal neu befestigt werden muss. Es wird ein schnellerer Aufbau von Zelt und Bett ermöglicht.

In einer weiteren Ausführungsform kann das Zelt freistehend verwendet werden, also ohne Verbindung zum Bett. Folglich ist das Zelt lösbar mit dem Bett verbunden und der Nutzer ist flexibler in der Wahl seines Schlafplatzes.

Auf dem Bettmodul oder dem Zeltmodul kann ein Gepäcknetz angebracht werden, das eine weitere Möglichkeit zum Verstauen von Gepäck bietet.

In einer weiteren Ausführungsform kann das Basismodul Aufnahmen für ein Stützensystem zum Abstützen des Anhängers auf unebenem Untergrund aufweisen.

Das Stützensystem kann so ausgelegt sein, dass sich der Hänger in 1 cm-Schritten den Gegebenheiten des Untergrunds anpassen lässt. Dadurch wird selbst bei abschüssigem Untergrund ein sicherer Stand des Anhängers in waagerechter Position ermöglicht. Der Anhänger fällt somit nicht seitlich um. Außerdem können Gegenstände, die auf dem Anhänger gestellt oder angebracht sind, nicht von diesem herunterfallen beziehungsweise herunterrollen.

Das Stützensystem kann beispielsweise in Fahrtrichtung vorne und/oder hinten ausfahrbar und/oder klappbar am Rahmenkonstrukt angeordnet sein. Das Stützensystem kann den Einspuranhänger beidseitig, also durch Bodenkontakt links und rechts vom Anhänger, abstützen. Das ist insbesondere bei Rahmenkonstruktionen vorteilhaft, die keine Kastenform aufweisen.

Das Stützensystem kann außerdem mittels Querstreben am Basismodul angeordnet werden, sodass der Anhänger beidseitig, also links und rechts vom Anhänger, abgestützt wird. Alternativ ist auch eine einseitige Anordnung des Stützensystems denkbar. Beispielsweise können Querstreben bzw. Horizontalstreben in die an der Rahmenkonstruktion des Basismoduls angeordneten Aufnahmen eingeschoben werden. Die Breite des Stützensystems kann individuell je nach Einschubtiefe eingestellt werden und somit das Aufstellen auf Flächen unterschiedlicher Größe ermöglicht.

Die Querstreben weisen an Ihrem dem Anhänger abgewendeten Ende eine Aufnahme für eine höhenverstellbare Stütze auf. Die Höhe kann durch definierte Aufnahmen, wie etwa Löcher, Schienen und dergleichen an der Stütze eingestellt werden. Die Aufnahmen sind dabei gleichmäßig beabstandet voneinander, beispielsweise in 1 cm Schritten. Entsprechende Mechanismen zur Festlegung der Querstreben an den Stützen sind dem Fachmann bekannt.

Die Aufnahme für die Querstreben kann beispielsweise eine Abmessung von 3 cm x 3 cm aufweisen. Die Stütze kann eine Höhe von 40 cm bis 50 cm aufweisen. Vorzugsweise eine Höhe von 40 cm oder 50 cm. Und eine 2 cm x 2 cm Abmessung aufweisen.

Eine weitere Stütze kann an der Deichselaufnahme angeordnet sein, um ein Abkippen des Anhängers nach vorne zu vermeiden. Die Stütze kann klappbar sein, sodass diese leicht auf und abgebaut werden kann.

In einer weiteren Ausführungsform weist das Bett im ausgeklappten und/oder ausgezogenen Zustand eine Stützkonstruktion auf. Die Stützkonstruktion kann dabei mit dem Stützensystem zusammenwirken oder mit diesem verbunden sein, sodass das Bett abgestützt ist und eine waagerechte Liegefläche gewährleistet ist.

In einer Ausführungsform kann der Abstand zwischen Bett und Untergrund mindestens 50 cm betragen. Damit wird ein ausreichender Abstand erreicht, der ein einfaches Ein- und Aussteigen ermöglicht.

Die Stützen der Stützenkonstruktion können dafür Aufnahmen für die Quer- oder Längsstreben des Bettrahmens aufweisen. Diese Aufnahmen können nachträglich an die Stützen angebracht werden oder sind klappbar und/oder ausziehbar mit den Stützen verbunden. Diese Verbindung kann eine Abmessung von 2,5 cm x 2,5 cm x 30 cm (Länge x Breite x Höhe) aufweisen.

Um das Bett über die gesamte Länge abzustützen, kann die Stützkonstruktion zusätzliche Stützen aufweisen, die zwischen einem oder beiden Bettenden und dem Stützensystem angeordnet sind. Dafür weist das Stützensystem Aufnahmen für diese zusätzlichen Stützen auf.

Mit einer solchen Stützkonstruktion ist ein Abstützen des Bettes für ein Gewicht im Bereich von bis zu 160 kg möglich, vorzugsweise von bis zu 120 kg.

Des Weiteren kann das Stützensystem und/oder die Stützenkonstruktion zur Aufnahme einer Wäscheleine dienen. Damit bietet der Anhänger selbst bei Regen eine Trocknungsmöglichkeit für Wäsche auf insgesamt 3,5 Meter Länge.

Der Einspuranhäger weist zudem geringere Abmessungen auf, sodass er für Fahrten auf kurvigen und engen Wegen geeignet ist. Außerdem hat der Anhänger ein leichtes Handling, das es ermöglicht, selbst engste Geländegegebenheiten wie Poller, Absperrungen und Schranken problemlos zu durchfahren.

In einer Ausführungsform beträgt die Länge des Basismoduls ohne Deichsel maximal 110 cm. In vorteilhafter Weise sollte die Breite des Anhängers die Breite des Lenkers des Fahrrads nicht übersteigen. Als besonders vorteilhaft hat sich eine Breite des Basismoduls von maximal 50 cm gezeigt. In einer weiteren Ausführungsform beträgt die Breite des Basismoduls folglich maximal 50 cm, vorzugsweise maximal 25 cm In einer weiteren Ausführungsform beträgt die Länge des Basismoduls ohne Deichsel maximal 110 cm und die Breite maximal 50 cm.

Die Fahreigenschaften des Anhängers sowie die aufzuwendende Kraft des Fahrers sind unter anderem vom Gewicht des Anhängers und des Gepäcks abhängig. Es ist vorteilhaft, wenn bereits das Basismodul ein möglichst geringes Gewicht aufweist, sodass selbst bei hoher Beladung mit Gepäck ein Gesamtgewicht erreicht wird, das die Fahreigenschaften des Anhängers nicht negativ beeinflusst und den Fahrer stärker belastet.

In einer weiteren Ausführungsform liegt das Gewicht des Basismoduls mit Deichsel und Bett-Zelt-Modul bei maximal 35 kg.

In einer vorteilhaften Ausführungsform ist die Rahmenkonstruktion in Aluminiumleichtbauweise gefertigt. In einer weiteren Ausführungsform weist das Basismodul ohne Deichsel ein Gewicht von maximal 20 kg auf. Vorzugsweise liegt das Gewicht des Basismoduls ohne Deichsel im Bereich von 10 bis 20 kg.

Ein weiterer Vorteil des erfindungsgemäßen Anhängers ist, dass unabhängig von der Anzahl und Anordnung weiterer Module am Basismodul, sämtliche Staufächer zugänglich und nutzbar sind. Das ist insbesondere vorteilhaft, wenn ein Bett-Zelt-Modul im geschlossenen oder geöffneten Zustand vorliegt, da in beiden Fällen der uneingeschränkte Zugang zu den Staufächern gewährleistet ist.

Um Essen zubereiten zu können, kann ein Solarmodul, vorzugsweise das in Fahrtrichtung hintere Solarmodul zu einer Kochunterlage umgebaut beziehungsweise erweitert werden. Dafür ist das Solarmodul aufklappbar und derart abgestützt, dass es Kochutensilien wie Becher oder Töpfe aufnehmen kann.

Des Weiteren kann der Anhänger um ein Kochmodul und/oder eine Arbeitsfläche erweitert werden. Diese sind vorzugsweise am im Fahrtrichtung hinteren Teil des Anhängers angeordnet. Ein Vorteil dieser Anordnung ist, dass die Hitze beim Kochen keine negativen Auswirkungen auf die weiteren Module des Anhängers hat bzw. die negativen Auswirkungen der Hitze reduziert werden.

In einer weiteren Ausführungsform ist das Bettmodul, insbesondere die Querstreben des Bettrahmens, teleskopartig ausziehbar. Um die Stabilität der ausgezogenen Rahmen zu erhöhen, können diese mehreckig, vorzugsweise sechs- oder achteckig, im Querschnitt sein. Zur weiteren Verbesserung der Stabilität können die sämtliche oder einzelne Rahmenbestandteile in Form einer Hohlstrebe, vorzugsweise einer Wabenstruktur, gefertigt sein. Des Weiteren kann zur Stabilisierung der Bettfläche im aufgebauten Zustand, die Bettauflage durch ausziehbare Querstreben verstärkt sein.

Um eine hohe Stabilität zu gewährleisten, kann die Rahmenkonstruktion und/oder Teile davon vollständig oder teilweise aus Kohlefaserverbundwerkstoff bestehen. Dieser lässt eine einfache Herstellung der einzelnen Teile der Rahmenkonstruktion und des Anhängers zu.

In einer weiteren Ausführungsform weist die Rahmenkonstruktion ein Oberrohr und ein Unterrohr auf, wobei das Oberrohr über dem Unterrohr angeordnet ist und wobei das Oberrohr und das Unterrohr durch ein Mittelrohr miteinander verbunden sind, dadurch ist die Rahmenkonstruktion stabilisiert.

Vorzugsweise ergibt sich dadurch eine Rahmenkonstruktion, die keine Kastenform aufweist. Dadurch wird eine weitere Platzeinsparung erreicht. Aufnahmen für Module, wie etwa Staufächer lassen dabei beispielsweise über Gepäckschienen an der Rahmenkonstruktion realisieren.

In einer weiteren Ausführungsform weist der Einspuranhänger einen Elektromotor auf, der das Laufrad antreibt. Vorzugsweise ist der Elektromotor ein Felgenmotor. Im Vergleich zu anderen Motoren ist dieser Wartungsärmer und flexibler einsetzbar.

Der Elektromotor kann zur Antriebsunterstützung eingesetzt werden. Ziel hierbei ist es, das Gewicht des Anhängers und den zur Fortbewegung aufgewendeten Kraftbedarf, zu reduzieren oder auszugleichen. Er dient nicht dem Vorschub des gesamten Gespanns.

In einer weiteren Ausführungsform weist der Einspuranhänger ein Dämpfersystem für die Radaufnahme auf. Dadurch wird erreicht, dass Unebenheiten bei der Fahrt weitestgehend ausgeglichen werden können und somit die Ladung des Anhängers sowie der Anhänger selber nicht vorspringt. Außerdem wird dadurch der Elektromotor vor Stößen geschützt.

In einer weiteren Ausführungsform weist der Einspuranhänger mindestens eine drahtlose Empfangseinrichtung für Geschwindigkeitssignale des ziehenden Fahrzeugs oder der ziehenden Person auf, wobei die drahtlose Empfangseinrichtung vorzugsweise im Elektromotor integriert ist.

Die Steuersignale für die benötigte Antriebsleistung des Motors, wird durch Geschwindigkeitsmessung errechnet. Der Messpunkt misst mittels Tachometer und/oder Trackingsoftware (z.B. in einer Smartwatch oder Handy) die Geschwindigkeit des Fahrrads der Person. Daraus und durch das vorab eingestellte Gewicht des Anhängers, ermittelt eine Steuersoftware die benötigte Schubkraftunterstützung. Dadurch wird der benötigte Kraftaufwand zur Fortbewegung des Anhängers größtmöglich ausgeglichen.

In einer weiteren Ausführungsform weist der Einspuranhänger Batterien und/oder Akkus auf, wobei die Batterien und/oder Akkus vorzugsweise in der Rahmenkonstruktion integriert sind. Dafür kann die Rahmenkonstruktion, vorzugsweise das Ober- oder Unterrohr, ein separates Fach inklusive Kontakten für die Batterien und/oder Akkus aufweisen. Die Batterien und/oder Akkus können über einen üblichen Stromanschluss und/oder über Solarmodule geladen werden. Der Strom aus den Batterien und/oder Akkus kann für den Betrieb des Elektromotors und weiterer energieverbrauchender Einrichtungen und Module des Einspuranhängers verbraucht werden.

In einer Ausführungsform sind die Rahmenkonstruktion und/oder einzelne Module ganz oder teilweise mittels 3D-Druckverfahren hergestellt. Die Fertigung einzelner Teile der Rahmenkonstruktion, der Module oder Verstrebungen mittels 3D Druck ist insbesondere für Klein- und Kleinstteile vorteilhaft, da damit die Fertigungstoleranzen erheblich herabgesetzt werden können.

Beispielsweise können Rahmenteilstücke wie Carbon Eckverstärker/ Verbinder, Aufnahmevorrichtung der Batterien und/oder Akkus, Verbindungsscharniere des Stützensystems und/oder Aufnahmen der Stautaschen durch 3D-Druck, wie etwa SLA, SLS, und/oder FDM, hergestellt werden.

Durch genaue Bauteilstärkenberechnung ist es möglich, den benötigten Materialbedarf auf ein Minimum zu reduzieren, bei gleichzeitig größtmöglichen Stabilitätsanforderungen. Gerade in der Produktion von Kleinserien bieten diese Verfahren eine kostengünstige, technologisch ausgereifte und schnell anpassbare Herstellungsmöglichkeit von Teilkomponenten.

Um ein zufälliges Herausfallen von Gepäck oder Equipment zu vermeiden und/oder es gegen Diebstahl zu schützen, kann das Staufach mindestens eine Vorrichtung zum Verschließen, vorzugsweise in Form eines Schlosses, aufweisen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Zeichnung des Basismoduls mit weiteren angeordneten Modulen nach einer Ausführungsform in Seitenansicht (Fig.1A) und Rückansicht (Fig. 1B)
- Fig. 2: eine schematische Zeichnung der Rahmenkonstruktion nach einer Ausführungsform.
- Fig. 3: eine schematische Zeichnung des Basismoduls nach Fig. 1A mit einer entsprechenden Detailansicht eines Stützensystems gemäß einer Ausführungsform.
- Fig.4: eine schematische Zeichnung des Basismoduls mit aufgeklappten Bett und aufgestelltem Zelt in Rückansicht gemäß einer Ausführungsform.
- Fig. 5: eine schematische Zeichnung des Basismoduls mit weiteren Modulen und aufgeklapptem Bett in einer Draufsicht gemäß einer Ausführungsform.
- Fig. 6: eine schematische Zeichnung des Basismoduls gemäß einer Ausführungsform.
- Fig. 7: eine schematische Zeichnung des Basismoduls mit Batterie-/Akkufächern gemäß einer Ausführungsform.
- Fig. 8: eine schematische Zeichnung des Basismoduls mit aufgeklapptem und ausgezogenem Bettmodul gemäß einer Ausführungsform.

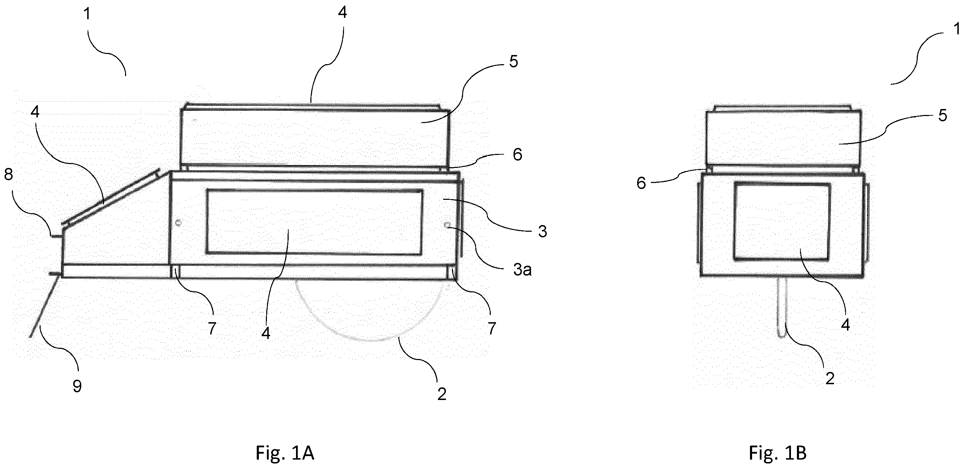

Fig. 1 zeigt in einer schematischen Seitenansicht (Fig. 1A) und eine schematische Rückansicht (Fig. 1B) des Einspuranhängers 1, der ein Laufrad 2 aufweist. Der Einspuranhänger 1 umfasst dabei ein Basismodul mit einer Rahmenkonstruktion 10. Es ist mindestens ein Staufach 3 angeordnet, dass Schlösser 3a zum verschließen des Staufachs aufweist. An dem Basismodul sind Solarmodule 4 zur Stromerzeugung angeordnet. Auf dem Basismodul liegt ein Bettmodul 5 auf, das ein klappbares Bett 5a umfasst. Das Bettmodul 5 ist über Aufnahmen 6 mit dem Basismodul lösbar oder unlösbar verbunden. Das Basismodul weist ferner Aufnahmen 7 für ein Stützensystem auf, die an der Rahmenkonstruktion 10 angeordnet sind. Das Basismodul umfasst eine Aufnahme 8 für eine Deichsel, die an der in Fahrtrichtung vorne angeordneten Seite des Basismoduls angeordnet ist. Zum Abstützen des Anhängers, also zum Schutz vor dem Abkippen nach vorne, ist eine Stütze 9 an der Deichselaufnahme angeordnet.

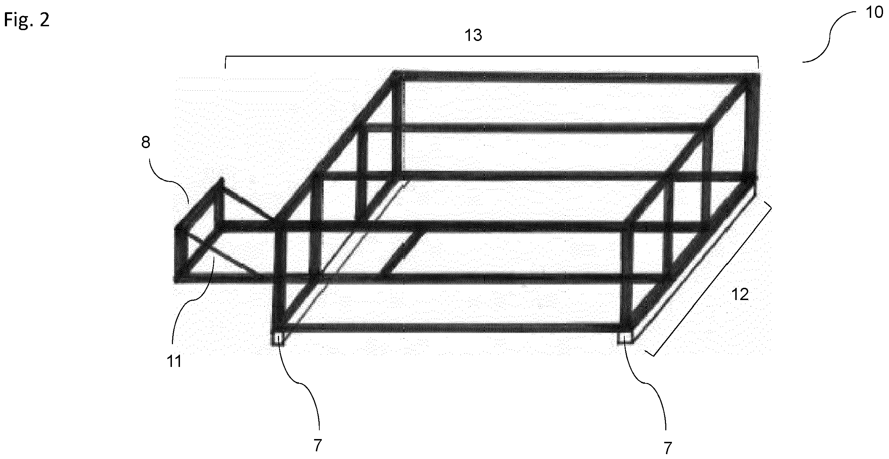

Fig. 2 zeigt eine Rahmenkonstruktion 10 eines Basismoduls des Einspuranhängers 1 gemäß Figur 1. Die Rahmenkonstruktion 10 umfasst Längs- und Querstreben, die miteinander verbunden sind und die eine definiertes Volumen umfassen. Der in Fahrtrichtung des Anhängers vordere Bereich der Rahmenkonstruktion 10 weist eine Deichselaufnahme 8 auf, die mit Verstrebungen 11 versehen ist. Die Rahmenkonstruktion 10 weist außerdem an den unteren Querstreben Aufnahmen für das Stützensystem 7 auf. Die Breite 12 der Rahmenkonstruktion entspricht der Breite des Basismoduls und wird durch die Querstreben der Rahmenkonstruktion vorgegeben. Die Gesamtlänge 13 der Rahmenkonstruktion entspricht der Länge des Basismoduls.

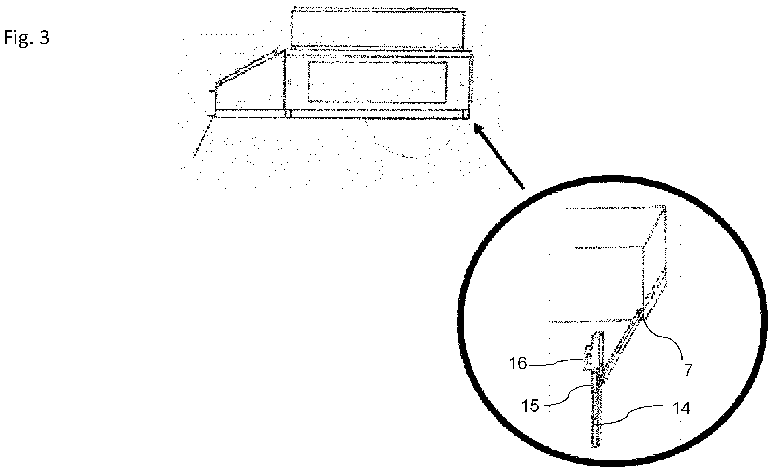

Fig. 3 zeigt eine schematische Detailzeichnung des Stützensystems zum Abstützen des Anhängers 1 gemäß Figur 1. Zum Abstützen wird eine Querstrebe 17 in die Aufnahme 7 eingeschoben. Das dem Anhänger abgewendete Ende der Querstrebe 17 weist ein Verbindungsteil 15 auf, das die Verbindung zwischen der höhenverstellbaren Stütze 14 und der Querstrebe 17 herstellt. Das Verbindungsteil kann ferner eine Aufnahme 16 für Streben des Bettrahmens aufweisen.

Die Aufnahme 7 kann eine Abmessung von 3 cm x 3 cm aufweisen. Die Stütze 14 kann eine Höhe von 40 cm bis 50 cm und eine Abmessung von 2 cm x 2 cm aufweisen. Die Verbindung kann eine Abmessung von 2,5 cm x 2,5 cm x 30 cm (Länge x Breite x Höhe) aufweisen.

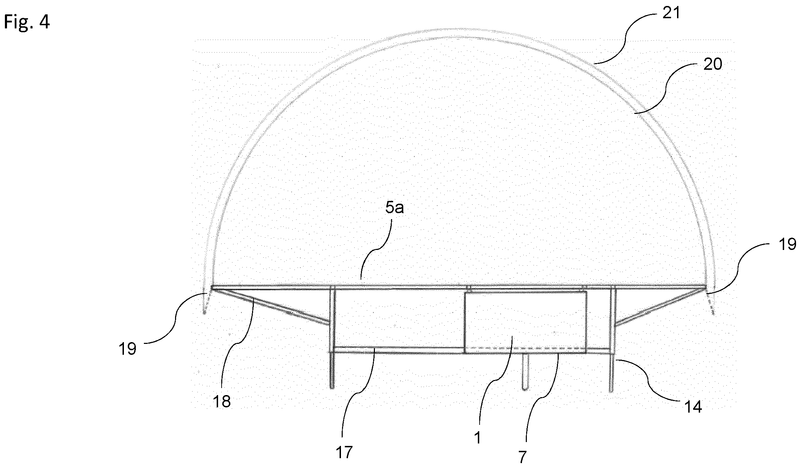

Fig. 4 zeigt in einer schematischen Zeichnung des Einspuranhängers 1 nach Figur 1 mit ausgeklapptem Bett 5a und aufgestelltem Zelt in Rückansicht. Der Anhänger 1 ist mittels Stützensystem abgestützt. Dafür ist eine Querstrebe 17 in die Aufnahme 7 eingeschoben worden. Das ausgeklappte Bett 5a ist mit einer Stützenkonstruktion über das Stützensystem des Anhängers abgestützt. Die Bettabschnitte, die über das Stützensystem hinausragen, sind mit weiteren Stützen 18 abgestützt. Die Stützen 18 sind zwischen dem Bettrahmen und der Aufnahme 16 angeordnet. Die Bettkonstruktion umfasst ferner ein Zelt, das ein faltbares Zelt umfasst, wobei das Zelt vorzugsweise ein atmungsaktives, insbesondere netzartiges Innenzelt 20 und ein wasserdichtes Außenzelt 21 umfasst.

Das Zelt ist mittel klappbarer Zeltstreben aufgerichtet, die in Aufnahmehülsen 19 am Bettrahmen lösbar festgelegt sind. Dafür werden die Zeltstreben in die dafür vorgesehenen Aufnahmehülsen 19 an dem Fuß- und Kopfende des Bettrahmens eingeführt. Es ergibt sich eine Strebenkonstruktion, die halbkreisförmig über das Bett 5a verläuft. Die weiteren Zeltelemente, wie etwa das Innenzelt 20 und das Außenzelt 21 sind mit der Strebenkonstruktion verbunden, sodass sich eine Zeltkonstruktion über dem Bett 5a ergibt.

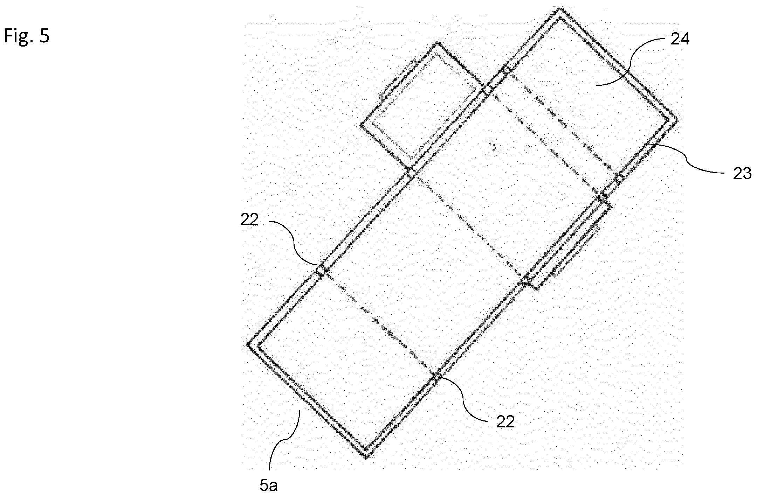

Fig. 5 zeigt in einer schematischen Draufsicht den Anhänger 1 mit aufgeklappten Bett 5a. Das Bett 5a ist senkrecht zur Fahrtrichtung des Anhängers 1 aufgeklappt. Das Bett 5a hat einen Rahmen 23 der Scharniere 22 aufweist. Über die Scharniere ist das Bett 5a klappbar. Die Scharniere können arretierbar sein. Die Liegefläche wird durch eine Stoffauflage 24 gebildet, die abnehmbar und waschbar ist.

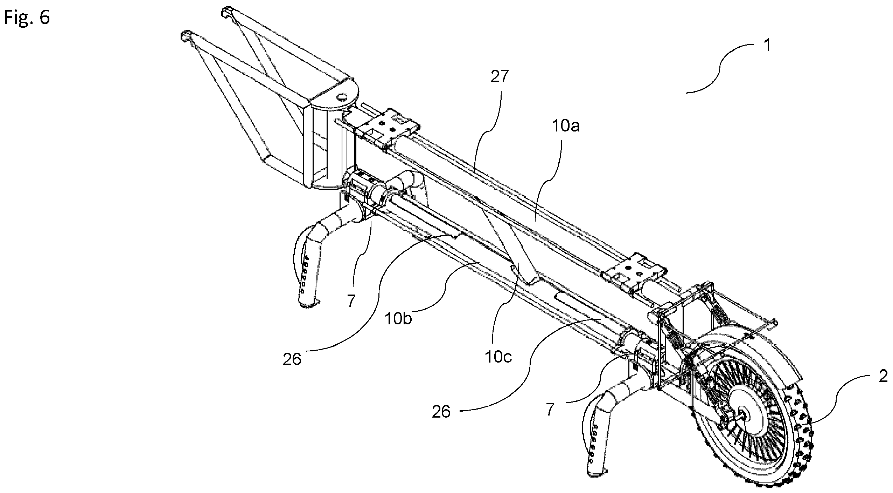

Figur 6 zeigt in einer schematischen Zeichnung des Einspuranhängers 1 die Rahmenkonstruktion 10 mit einem Oberrohr 10a, einem Unterrohr 10b und einem Mittelrohr 10c, das das Oberrohr 10a und das Unterrohr 10b verbindet. In Fahrtrichtung des Anhängers vorne und hinten sind Aufnahmen für das Stützensystem 7 mit Stützen zum abstützen des Anhängers angeordnet. Im Unterrohr 10b sind Batterie-/Akkufächer 26 angeordnet, die der Energiespeicherung und Energiebereitstellung dienen. Am Oberrohr 10a und dem Unterrohr 10b sind Staufachaufnahmen in Form von Gepäckschienen angeordnet. An diesen können in einfacher Art und Weise Staufächer, wie etwa Taschen etc., angebracht werden. Am hinteren Teil der Rahmenkonstruktion 10, beispielsweise über dem Laufrad, kann ein Kochmodul für das Gas- und/oder Elektrokochen, sowie eine Arbeitsfläche zum Vorbereiten von Speisen angeordnet sein.

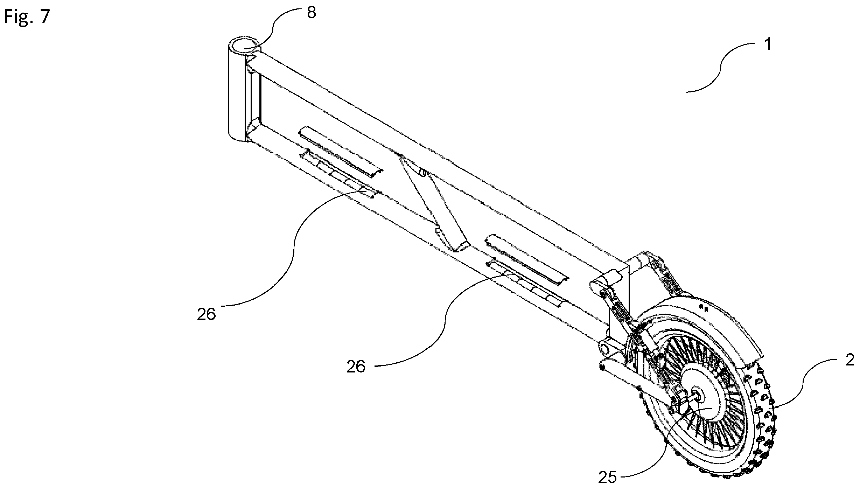

Figur 7 zeigt in einer schematischen Zeichnung des Einspuranhängers 1, in einer reduzierten ausführungsform nach Figur 6, Eine Rahmenkonstruktion 10 mit einer Deichselaufnahme 8 und Batterie/Akkufächern 26 im Unterrohr 10b. Im Laufrad 2 ist ein Elektromotor 28 in Form eines Felgenmotors eingebaut, der zur Antriebsunterstützung eingesetzt werden kann. Für die Steuerung der Antriebsunterstützung kann eine drahtlose Empfangseinrichtung im Elektromotor 28 integriert sein. Die drahtlose Empfangseinrichtung interagiert mit entsprechenden Geschwindigkeitssensoren am Fahrzeug oder der Person.

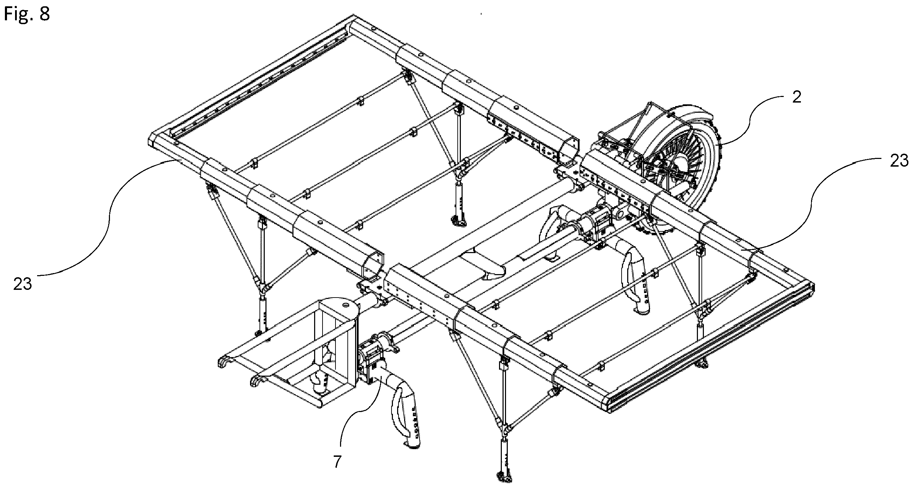

Figur 8 zeigt in einer schematischen Zeichnung des Einspuranhängers 1 nach Figur 6 das ausgeklappte und ausgezogene Bettmodul 5. Das Bettmodul weist einen Bettrahmen auf bei dem die Querstreben teleskopartig ausgezogen sind. Um die Stabilität der ausgezogenen Rahmen zu erhöhen, sind diese achteckig im Querschnitt. Des Weiteren ist zur Stabilisierung der Bettfläche, die Bettauflage durch ausziehbare Querstreben verstärkt. Der Bettrahmen 23 lässt sich zusammenschieben und an der Aufnahme am Oberrohr 10a nach unten, beidseitig zur Rahmenkonstruktion 10, wegklappen.

Hinsichtlich weiterer vorteilhafter Ausgestaltungen des erfindungsgemäßen Einspuranhängers wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Einspuranhängers lediglich zur Erörterung der beanspruchten Lehre dienen, diese jedoch nicht auf die Ausführungsbeispiele einschränken.

### Bezugszeichenliste

- 1: Einspuranhänger
- 2: Laufrad
- 3: Staufach
- 3a: Schloss
- 4: Solarmodul
- 5: Bettmodul
- 5a: Bett
- 6: Aufnahme Bettmodul
- 7: Aufnahme Querstreben Stützensystem
- 8: Aufnahme Deichsel
- 9: Stütze
- 10: Rahmenkonstruktion
- 10a: Oberrohr
- 10b: Unterrohr
- 10c: Mittelrohr
- 11: Verstrebung
- 12: Breite Rahmenkonstruktion/ Basismodul
- 13: Länge Rahmenkonstruktion/ Basismodul
- 14: Höhenverstellbare Stütze
- 15: Verbindungssteil
- 16: Aufnahme Streben Bettrahmen
- 17: Querstrebe
- 18: Stütze
- 19: Aufnahmehülse
- 20: Innenzelt
- 21: Außenzelt
- 22: Scharnier
- 23: Bettrahmen
- 24: Stoffauflage
- 25: Elektromotor
- 26: Batterie-/Akkufach
- 27: Staufachaufnahme (Gepäckschiene)

## Patentansprüche

1. Modularer Einspuranhänger umfassend ein Basismodul mit einer Rahmenkonstruktion 10, die eine Bodengruppe trägt, an der eine Radachse mit einem Laufrad 2 angeordnet ist, wobei die Rahmenkonstruktion 10 mindestens ein Staufach 3 umfasst, und wobei das Basismodul Aufnahmen für mindestens ein weiteres Modul aufweist.

2. Einspuranhänger nach Anspruch 1, wobei mindestens ein abnehmbares Solarmodul 4 zur Stromgewinnung an dem Basismodul angeordnet ist.

3. Einspuranhänger nach Anspruch 1 oder 2, wobei das Basismodul ein thermoisoliertes Kühlfach aufweist, das vorzugsweise in einem Staufach 3 angeordnet ist.

4. Einspuranhänger nach einem der Ansprüche 1 bis 3, wobei an der Rahmenkonstruktion 10 eine Deichsel lösbar oder unlösbar angeordnet ist.

5. Einspuranhänger nach einem der Ansprüche 1 bis 4, wobei an dem Basismodul ein Bettmodul 5 angeordnet ist, das ein klappbares und/oder ausziehbares Bett 5a umfasst.

6. Einspuranhänger nach Anspruch 5, wobei das Bettmodul 5 ferner ein Zeltmodul umfasst, das ein faltbares Zelt umfasst, wobei das Zelt vorzugsweise ein atmungsaktives, insbesondere netzartiges Innenzelt 20 und ein wasserdichtes Außenzelt 21 umfasst.

7. Einspuranhänger nach Anspruch 6, wobei das Bett 5a Aufnahmehülsen 19 für klappbare und/oder ausziehbare Zeltstreben aufweist, um das Zelt aufzurichten.

8. Einspuranhänger nach einem der Ansprüche 5 bis 7, wobei das Bett 5a senkrecht zur Fahrtrichtung des Anhängers klappbar und/oder ausziehbar ist.

9. Einspuranhänger nach einem der Ansprüche 5 bis 8, wobei das Bett 5a im ausgeklappten und/oder ausgezogenen Zustand eine Stützkonstruktion aufweist.

10. Einspuranhänger nach einem der Ansprüche 1 bis 9, wobei das Basismodul Aufnahmen 7 für ein Stützensystem zum Abstützen des Anhängers auf unebenem Untergrund aufweist.

11. Einspuranhänger nach einem der Ansprüche 1 bis 10, wobei die Breite 12 des Basismoduls maximal 50 cm beträgt und/oder wobei das Basismodul ohne Deichsel ein Gewicht von maximal 20 kg aufweist.

12. Einspuranhänger nach einem der Ansprüche 1 bis 11, wobei die Rahmenkonstruktion 10 ein Oberrohr 10a und ein Unterrohr 10b aufweist, wobei das Oberrohr 10a über dem Unterrohr 10b angeordnet ist und wobei das Oberrohr 10a und das Unterrohr 10b durch ein Mittelrohr 10c miteinander verbunden sind.

13. Einspuranhänger nach einem der Ansprüche 1 bis 12, wobei der Einspuranhänger einen Elektromotor 25 aufweist, der das Laufrad 2 antreibt.

14. Einspuranhänger nach Anspruch 13, wobei der Einspuranhänger mindestens eine drahtlose Empfangseinrichtung für Geschwindigkeitssignale des ziehenden Fahrzeugs oder der ziehenden Person aufweist, wobei die drahtlose Empfangseinrichtung vorzugsweise im Elektromotor 25 integriert ist.

15. Einspuranhänger nach einem der Ansprüche 1 bis 14, wobei die Rahmenkonstruktion 10 und/oder einzelne Module ganz oder teilweise mittels 3D-Druckverfahren hergestellt sind.
